(19) Europäisches Patentamt
European Patent Office
Office européen des brevets

(11) **EP 3 680 734 B1**

(12) **FASCICULE DE BREVET EUROPEEN**

(45) Date de publication et mention de la délivrance du brevet:
**13.04.2022 Bulletin 2022/15**

(21) Numéro de dépôt: **20151004.7**

(22) Date de dépôt: **09.01.2020**

(51) Classification Internationale des Brevets (IPC):
**G05B 17/02** (2006.01)     **G05B 23/02** (2006.01)

(52) Classification Coopérative des Brevets (CPC):
**F24F 11/39; F24F 11/62; G05B 17/02; G05B 23/0283;** F24F 2110/40; G05B 2219/2614

(54) **MÉTHODE POUR ÉVALUER UN NIVEAU DE BOUCHAGE D'UN FILTRE À AIR DANS UNE UNITÉ HVAC**

METHODE ZUM EINSCHÄTZEN DES VERSTOPFUNGSZUSTANDS EINES LUFTFILTERS IN EINER HLKK-ANLAGE

METHOD FOR ASSESSING THE CLOGGING LEVEL OF AN AIR FILTER IN A HVAC UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.01.2019 FR 1900196**

(43) Date de publication de la demande:
**15.07.2020 Bulletin 2020/29**

(73) Titulaire: **ALSTOM Transport Technologies 93400 Saint-Ouen (FR)**

(72) Inventeurs:
• **STAINO, Andrea**
  **78600 Maisons-Laffite (FR)**
• **ABOU-EID, Rami**
  **75018 Paris (FR)**

(74) Mandataire: **Lavoix**
  **2, place d'Estienne d'Orves**
  **75441 Paris Cedex 09 (FR)**

(56) Documents cités:
WO-A1-2005/059669     WO-A1-2017/167666
FR-A1- 2 770 788     US-A1- 2015 059 492

## Description

La présente invention concerne une méthode pour évaluer un niveau de bouchage d'un filtre à air dans une unité HVAC (abréviation de l'anglais *Heating, Ventilation and Air-Conditioning,* c'est-à-dire chauffage, ventilation et climatisation), en particulier une unité embarquée dans un véhicule ferroviaire.

L'invention concerne également un calculateur correspondant, et une installation comportant l'unité HVAC et un tel calculateur.

Le filtre à air d'une unité HVAC est obstrué progressivement par l'accumulation de particules telles que la poussière, la saleté, l'herbe, le pollen, etc. Un filtre à air bouché a tendance à prolonger les plages de fonctionnement du compresseur, réduire le rendement énergétique de l'unité, et réduire la capacité de refroidissement et de chauffage. Ceci peut conduire à l'apparition de givre sur les serpentins d'évaporateur et éventuellement causer une défaillance de l'unité. Par conséquent, le filtre doit être changé périodiquement afin d'éviter ces problèmes.

Généralement, les filtres à air sont remplacés périodiquement en fonction des indications du fabricant. Le remplacement est souvent effectué sans évaluer la capacité de rétention résiduelle réelle du filtre. De plus, l'inspection des filtres à air pour un véhicule ferroviaire nécessite habituellement l'arrêt du véhicule ferroviaire dans un dépôt et l'accès au toit. Cela a une incidence sur la disponibilité des véhicules ferroviaires. Un remplacement inutile du filtre est coûteux et prend du temps. Il n'est donc pas souhaitable.

Selon son abrégé, US 2015/059492 décrit un système électronique pour analyser un flux de liquide, adapté pour réaliser des mesures et pour modéliser une évolution future des paramètres mesurés.

Un but de l'invention est de permettre une estimation précise du niveau de bouchage du filtre à air, par exemple dans le but d'éviter un remplacement trop précoce du filtre à air.

A cet effet, l'invention concerne une méthode selon la revendication 1.

Selon des modes particuliers de réalisation, la méthode comprend l'une ou plusieurs des caractéristiques correspondant aux revendications 2 à 7, prise(s) seule ou selon toutes les combinaisons techniquement possibles.

L'invention a également pour objet un procédé de maintenance de l'unité HVAC comprenant les étapes suivantes :

- mise en œuvre d'une méthode telle que décrite ci-dessus,
- en fonction du niveau de bouchage, réalisation d'un acte de maintenance tel qu'un remplacement du filtre à air.

L'invention a également pour objet un calculateur selon la revendication 8.

Selon un mode de réalisation particulier, le calculateur comprend un module de mise à disposition du niveau de bouchage adapté pour afficher ou transmettre le niveau de bouchage calculé.

L'invention a également pour objet une installation comportant :

- une unité HVAC, et
- un calculateur tel que décrit ci-dessus.

L'invention sera mieux comprise à la lecture de la description qui va suivre, donnée uniquement à titre d'exemple et faite en se référant aux dessins annexés, sur lesquels :

[Fig 1] la figure 1 est une vue schématique d'une installation selon l'invention,
[Fig 2] la figure 2 est un graphique représentant des pertes de charge dans le filtre à air de l'installation représentée sur la figure 1, à différentes phases d'une méthode selon l'invention,
[Fig 3] la figure 3 est un graphique illustrant une phase de calage d'une méthode selon l'invention,
[Fig 4] la figure 4 est un histogramme illustrant une phase de calcul d'une méthode selon l'invention pour obtenir la durée de vie utile résiduelle probable du filtre à air, et
[Fig 5] la figure 5 est un histogramme illustrant une phase de calcul d'une méthode selon l'invention pour obtenir une probabilité pour que, au bout d'un laps de temps donné H de deux semaines, la perte de charge dans le filtre à air ait atteint une valeur prédéterminée.

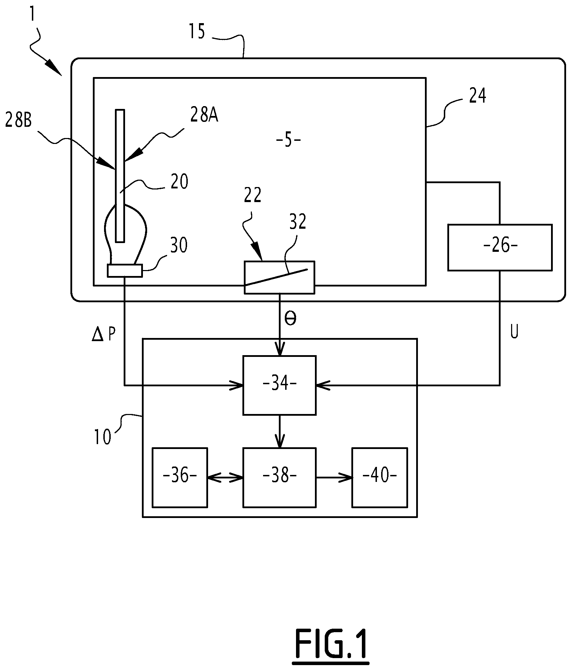

En référence à la figure 1, on décrit une installation 1 selon l'invention.

L'installation 1 comprend une unité HVAC 5, et un calculateur 10.

L'unité HVAC 5 est par exemple embarquée à bord d'un véhicule ferroviaire 15, tandis que le calculateur 10 est distant, par exemple situé dans un centre de maintenance (non représenté).

L'unité HVAC 5 comprend un filtre à air 20, une prise d'air 22, et une enceinte 24 adaptée pour abriter les autres éléments classiques d'une unité HVAC qui ne seront pas décrits ici.

L'unité HVAC 5 est conçue pour fournir un débit d'air conditionné $Q_{air}$ égal à une valeur nominale lorsque l'unité HVAC 5 fonctionne à 100% de sa capacité nominale. Au fur et à mesure que le filtre à air 20 se bouche, le débit d'air conditionné $Q_{air}$ que l'unité HVAC 5 est capable de fournir diminue.

L'unité HVAC 5 est par exemple connectée électriquement à un convertisseur statique 26 situé dans le véhicule ferroviaire 15 et adapté pour délivrer à l'unité HVAC une tension électrique U ajustable.

Le filtre à air 20 possède deux côtés 28A, 28B entre lesquels le passage d'un flux d'air (non représenté) crée une perte de charge $\Delta P$, c'est-à-dire une différence de pression entre le côté amont et le côté aval. La perte de charge $\Delta P$ ainsi définie est le plus souvent positive, mais peut parfois s'inverser et devenir négative selon les conditions de fonctionnement de l'unité HVAC 5.

Le filtre à air 20 est équipé d'un capteur de pression 30 adapté pour mesurer la perte de charge $\Delta P$ à une pluralité d'instants, par exemple tous les 1 seconde lorsque l'unité HVAC 5 est en service.

La prise d'air 22 comporte un clapet 32 définissant un angle d'ouverture $\theta$ par rapport à l'enceinte 24 de l'unité HVAC 5, et avantageusement un capteur d'ouverture 33 adapté pour mesurer l'angle d'ouverture.

L'angle d'ouverture $\theta$ conditionne la quantité d'air extérieur admise dans l'unité HVAC 5.

Le calculateur 10 est configuré pour évaluer un niveau de bouchage du filtre à air 20. Le calculateur 10 est par exemple distant, c'est-à-dire non embarqué dans le véhicule ferroviaire 15. Le calculateur 10 est avantageusement hébergé dans un centre de maintenance (non représenté).

En variante (non représentée), le calculateur 10 est embarqué à bord du véhicule ferroviaire 15.

Le calculateur 10 comprend un module d'acquisition 34, une mémoire 36, et un module de calcul 38. Avantageusement, le calculateur comprend aussi un module de mise à disposition 40 pour afficher ou transmettre le niveau de bouchage.

Le module de mise à disposition 40 est par exemple un écran.

Le module d'acquisition 34 est adapté pour acquérir une première pluralité de paramètres $\Delta P_{raw}$ représentatifs de la perte de charge entre les deux côtés 28A, 28B du filtre à air 20 à une pluralité d'instants, par exemple toutes les secondes lorsque l'unité HVAC 5 est en service. Avantageusement, le module d'acquisition 34 est aussi adapté pour acquérir la tension électrique U et/ou l'angle d'ouverture $\theta$ à la même pluralité d'instants.

Par exemple, les paramètres $\Delta P_{raw}$ sont des pertes de charges $\Delta P$ entre les deux côtés 28A, 28B, avantageusement mesurées par le capteur de pression 30 ou obtenues à partir de mesures faites par le capteur de pression.

Dans la mémoire 36 sont enregistrés une variété de scénarios Si représentatifs de conditions de fonctionnement futures de l'unité HVAC 5 sur une pluralité de segments de temps futurs, des probabilités pi que les scénarios Si se produisent effectivement, et un paramètre $\Delta P_{max}$ représentatif d'une perte de charge maximale autorisée entre les deux côtés 28A, 28B du filtre à air 20.

Par exemple, chacun des scénarios Si définit la distribution de diamètre de particule, la concentration de particule et temps de fonctionnement du système.

Par définition, la somme des probabilités pi est égale à 1. Selon un cas particulier, les scénarios sont générés de manière à être équiprobables (méthode de Monte Carlo).

Le paramètre $\Delta P_{max}$ est par exemple une perte de charge maximale, avantageusement calculée par le calculateur 38 à partir d'un paramètre $Q_{air,min}$ représentatif d'un débit minimal d'air conditionné souhaité pour l'unité HVAC 5.

En variante, le paramètre $\Delta P_{max}$ est directement fourni et inscrit dans la mémoire 36.

Le paramètre $Q_{air,min}$ est avantageusement calculé par le calculateur 38 comme étant une fraction, par exemple 90%, du débit nominal d'air conditionné de l'unité HVAC 5.

En variante, le paramètre $Q_{air,min}$ est directement fourni et inscrit dans la mémoire 36.

Le module de calcul 38 est adapté pour calculer une seconde pluralité de paramètres $\Delta P_{seg}$ à partir de la première pluralité de paramètres $\Delta P_{raw}$, et, pour chacun des scénarios Si, une troisième pluralité de paramètres $(\Delta P'_{seg})_i$ représentatifs d'une évolution future de la perte de charge entre les deux côtés 28A, 28B du filtre à air 20 sur au moins certains des segments de temps futurs. Le module de calcul 38 est en outre adapté pour calculer, à l'aide de la troisième pluralité de paramètres $(\Delta P'_{seg})_i$ et des probabilités pi, le niveau de bouchage du filtre à air 20.

Avantageusement, le module de calcul 38 est également adapté pour calculer un paramètre K représentatif d'une résistance hydraulique du filtre à air 20.

Chacun des paramètres $\Delta P_{seg}$ est respectivement représentatif d'une moyenne d'au moins certains des paramètres $\Delta P_{raw}$ sur un segment de temps passé.

Par exemple, les segments de temps passés et les segments de temps futurs ont des durées égales à 1 jour.

Le niveau de bouchage du filtre à air 20 est par exemple :

- soit une durée de vie utile résiduelle probable du filtre à air, représentative d'un laps de temps probable au bout duquel les paramètres $(\Delta P'_{seg})_i$ auront atteint le paramètre $\Delta P_{max}$,
- soit une probabilité pour que, au bout d'un laps de temps donné H, les paramètres $(\Delta P'_{seg})_i$ aient atteint le paramètre $\Delta P_{max}$.

Le fonctionnement de l'installation 1 et en particulier celui du calculateur 10 vont maintenant être expliqués pour illustrer une méthode selon l'invention.

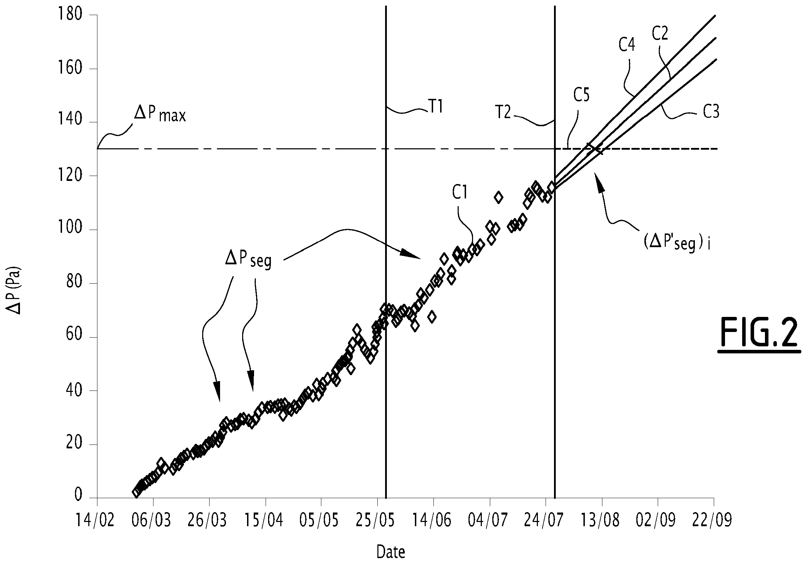

Sur la figure 2 est représenté un diagramme avec, en abscisse, le temps sous forme de date (du 6 mars au 22 septembre dans l'exemple), et, en ordonnée, la perte de charge $\Delta P$ dans le filtre à air 20 en pascals (Pa).

Le module d'acquisition 34 réalise tout d'abord l'acquisition de la première pluralité de paramètres $\Delta P_{raw}$, et avantageusement, d'une part, de la tension électrique U fournie par le convertisseur statique 26 et, d'autre part, de l'angle d'ouverture $\theta$ du clapet 32. Ces paramètres ne sont pas représentés sur la figure 2. L'acquisition est réalisée dans l'exemple à une pluralité d'instants s'étalant sur une période allant du 6 mars au 25 juillet.

Sur la figure 2, une barre verticale T1 représente le moment où une opération de maintenance du filtre à air 20, par exemple son remplacement, était initialement prévue. Une barre verticale T2 représente le temps présent, ici le 26 juillet. Grâce à la méthode selon l'invention, le remplacement prévu a pu être évité, et n'a toujours pas été jugé nécessaire au temps présent correspondant à la barre verticale T2.

Puis, le module de calcul 38 calcule la seconde pluralité de paramètres $\Delta P_{seg}$ à partir de la première pluralité de paramètres $\Delta P_{raw}$. Les paramètres $\Delta P_{seg}$ forment une courbe C1 sur la figure 2, montrant une augmentation à peu près régulière de la perte de charge dans le filtre à air 20 jusqu'au temps présent.

Chaque paramètre $\Delta P_{seg}$ est une moyenne de certains des paramètres $\Delta P_{raw}$ mesurés pendant l'un des segments de temps passés, c'est-à-dire une moyenne journalière éventuellement conditionnelle.

Avantageusement, les paramètres $\Delta P_{raw}$ sélectionnés par le module de calcul 38 pour obtenir chacun des paramètres $\Delta P_{seg}$ sont tels que la tension électrique U mesurée au même instant était supérieure à un seuil de tension $U_{max}$, par exemple 470 V. Dit autrement, on ne tient pas compte des paramètres $\Delta P_{raw}$ obtenus lorsque la tension électrique U est trop basse.

En effet, la valeur de la perte de charge à travers le filtre à air 20 change lorsque la fréquence des ventilateurs (non représentés) de l'unité HVAC 5 change. Si l'unité HVAC 5 est équipée d'un variateur de fréquence (non représenté), les ventilateurs sont contrôlés en ajustant leur fréquence de fonctionnement, qui est proportionnelle à la tension électrique U. Il a été observé que le fait de ne pas prendre en compte dans les moyennes $\Delta P_{seg}$ les paramètres $\Delta P_{raw}$ mesurés lorsque la tension électrique U est inférieure à un certain seuil augmente la précision de la méthode en améliorant la cohérence interne des paramètres $\Delta P_{seg}$.

Avantageusement, les paramètres $\Delta P_{raw}$ sélectionnés pour obtenir chacun des paramètres $\Delta P_{seg}$ sont tels que l'angle d'ouverture θ est sensiblement égal à une même valeur prédéterminée, de préférence la plus petite possible, de préférence nulle. Dit autrement, on ne tient pas compte des paramètres $\Delta P_{raw}$ obtenus lorsque l'angle d'ouverture θ n'est pas sensiblement égal à 0°, c'est-à-dire que le clapet n'est pas fermé.

Par « sensiblement égal », on entend en pratique, par exemple, que la différence est inférieure à 5°, par exemple inférieure à 1°.

Lorsque l'unité HVAC 5 a besoin d'air frais, le clapet 32 est ouvert pour permettre à de l'air extérieur à l'enceinte 15 de pénétrer dans l'unité HVAC. L'angle d'ouverture θ est alors non nul. Ensuite, le clapet 32 est refermé et l'angle d'ouverture θ redevient sensiblement nul. Or, la valeur de l'angle d'ouverture θ est susceptible d'affecter la perte de charge mesurée dans le filtre à air 20. Il a été observé que ne sélectionner que les paramètres $\Delta P_{raw}$ mesurés lorsque l'angle d'ouverture θ est sensiblement égal à une même valeur prédéterminée augmente la précision de la méthode, en améliorant la cohérence interne des paramètres $\Delta P_{seg}$.

Ainsi,

$$\Delta P_{seg} = f1(\Delta P_{raw}, U, \theta)$$

où

F1 est une moyenne conditionnelle.

Selon une variante, tous les paramètres $\Delta P_{raw}$ sont utilisés pour calculer les moyennes $\Delta P_{seg}$. Dans ce cas, $P_{seg} = f1(\Delta P_{raw})$ et la moyenne f1 n'est pas conditionnelle.

Avantageusement, pour l'un des segments de temps passés, de préférence le dernier temporellement, le module de calcul 38 calcule le paramètre K, dans l'exemple une résistance hydraulique du filtre à air 20, en utilisant le paramètre $\Delta P_{seg}$ correspondant audit segment de temps passé.

La résistance hydraulique est définie comme le ratio dudit paramètre $\Delta P_{seg}$ divisé par le carré d'un débit d'air $Q_{air}$ capable de créer dans le filtre à air 20 une perte de charge égale audit paramètre $\Delta P_{seg}$ :

$$K = \Delta P_{seg} / Q_{air}^2 \text{ où}$$

$$Q_{air} = f2(\Delta P_{seg}),$$

f2 étant une fonction connue de l'homme du métier et issue des principes de fonctionnement des turbomachines et de la mécanique des fluides. La fonction f2 est par exemple polynômiale et est avantageusement fournie par le fabricant du filtre.

A partir du paramètre K, le module calcule avantageusement d'un paramètre D représentatif d'une différence entre la résistance hydraulique du filtre à air 20 et la résistance hydraulique K0 d'un filtre à air neuf (non représenté). Le paramètre D est un indicateur de santé du filtre à air 20.

$$\text{Ainsi, } D = f3(K, K0)$$

Si K0 est un nombre, alors, par exemple, D = K - K0

Si K0 est exprimée sous la forme d'une distribution de moyenne μ et d'écart type σ, la fonction f3 est par exemple la distance de Mahalanobis :

$$D = |K - \sigma| / \mu$$

La perte de charge maximale $\Delta P_{max}$ est par

exemple donnée.

En variante, elle est calculée à partir du paramètre $Q_{air,min}$ représentatif d'un débit minimal d'air conditionné (ou de froid) souhaité pour l'unité HVAC 5 :

$$\Delta P_{max} = f4(Q_{air,min}) = f2^{-1}(Q_{air,min})$$

Dans l'exemple représenté sur la figure 2, $\Delta P_{max}$ vaut environ 130 Pa.

Chacun des scénarios Si représente par exemple les conditions de fonctionnement de l'unité HVAC 5 sur la période du 26 juillet au 22 septembre (c'est-à-dire le futur, pour un temps présent arbitrairement fixé au 26 juillet dans l'exemple).

A l'aide d'un modèle connu de l'homme du métier, tel que les modèles de colmatage de milieu poreux basés sur la loi de Darcy, le module de calcul 38 calcule, pour chacun des scénarios Si, une troisième pluralité de paramètres $(\Delta P'_{seg})_i$ représentatifs d'une évolution future de la perte de charge entre les deux côtés 28A, 28B du filtre à air 20 sur au moins certains des segments de temps futurs, couvrant dans l'exemple la période du 26 juillet au 22 septembre.

Sur la figure 2, on a symbolisé les paramètres $(\Delta P'_{seg})_i$ par des courbes C2, C3, C4.

La courbe C2 représente symboliquement l'évolution la plus probable de la perte de charge dans le filtre à air 20. La courbe C2 est obtenue en calculant, pour chacun des segments de temps futur (ici chaque jour), la perte de charge la plus probable.

Les courbes C3 et C4 encadrent la courbe C2 et représentent respectivement et symboliquement les valeurs entre lesquelles la perte de charge a 90% de chances de se situer. Dit autrement, pour chaque segment de temps futur, la perte de charge a 95% de chances de se situer au-dessus de la courbe C3 et 95% de chances de se situer au-dessous de la courbe C4.

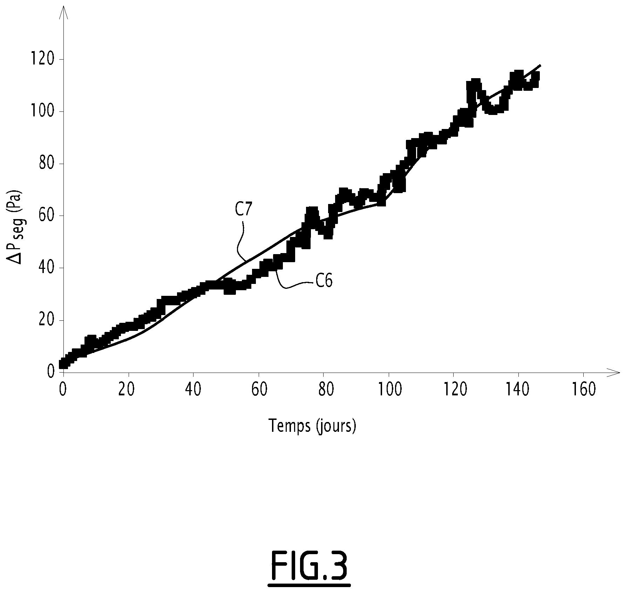

Avantageusement, le module de calcul 38 réalise un calage de certains de ses paramètres internes non fournis par les scénarios Si. Par exemple, comme représenté sur la figure 3, sur la période passée allant du 6 mars au 26 juillet, le module de calcul 38 utilise l'état du filtre à 20 au 6 mars et le scénario qui s'est réellement produit entre le 6 mars et le 26 juillet pour calculer, à l'aide du modèle, l'évolution de perte de charge journalière sur cette période représentée par une courbe C7. Puis, le module de calcul 38 ajuste lesdits paramètres à caler pour que la courbe C7 soit la plus proche possible d'une courbe C6 représentant les valeurs de $\Delta P_{seg}$ réellement obtenus à partir des mesures sur cette période.

Avantageusement, le module de calcul 38 ne calcule les paramètres $(\Delta P'_{seg})_i$ que si la résistance hydraulique K a dépassé un seuil haut prédéterminé, ou si le paramètre D (indicateur de santé du filtre à air 20) a franchi un seuil bas prédéterminé.

Les scénarios Si fournissent par principe tous les paramètres dont le modèle utilisé par le module de calcul 38 a besoin.

Pour chacune des pluralités de paramètres $(\Delta P'_{seg})_i$, c'est-à-dire chacune des évolutions futures de la perte de charge associée à un des scénarios Si, le module de calcul 38 calcule une durée de vie utile résiduelle RUL, en jour, représentative du laps de temps au bout duquel les paramètres $(\Delta P'_{seg})_i$ atteignent la perte de charge maximale $\Delta P_{max}$.

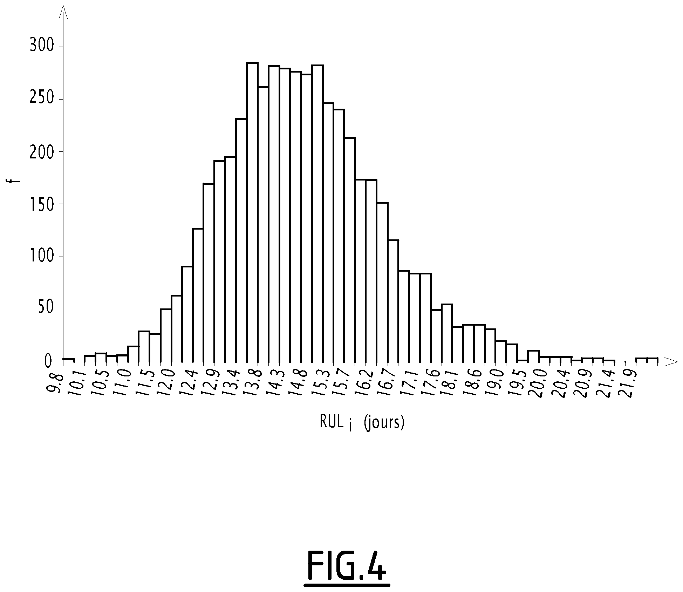

Sur la figure 4 est représenté un histogramme de fréquence des durées de vie utiles résiduelles $RUL_i$ pour tous les scénarios Si. Dans le cas particulier où les scénarios Si sont équiprobables, ces fréquences représentent directement des probabilités.

Le module de calcul 38 calcule la durée de vie utile résiduelle la plus probable du filtre à air 20, représentative d'un laps de temps probable au bout duquel les paramètres $(\Delta P'_{seg})_i$ auront atteint le paramètre $\Delta P_{max}$. Dans l'exemple, la durée de vie utile résiduelle la plus probable est d'environ 14 ou 15 jours. Dit autrement, il est probable que, 14 jours après le 26 juillet, la perte de charge $\Delta P_{seg}$ dans le filtre à air 20 aura atteint la perte de charge maximale $\Delta P_{max}$ souhaitée.

La durée de vie utile résiduelle la plus probable est représentative du niveau de bouchage du filtre à air 20 en ce sens que, toutes choses égales par ailleurs, elle est d'autant plus courte que le filtre à air est déjà bouché au 26 juillet.

En variante, à partir des paramètres $(\Delta P'_{seg})_i$, le module de calcul 38 évalue, pour chacun des scénarios Si, la perte de charge au bout d'un laps de temps donné H, par exemple deux semaines.

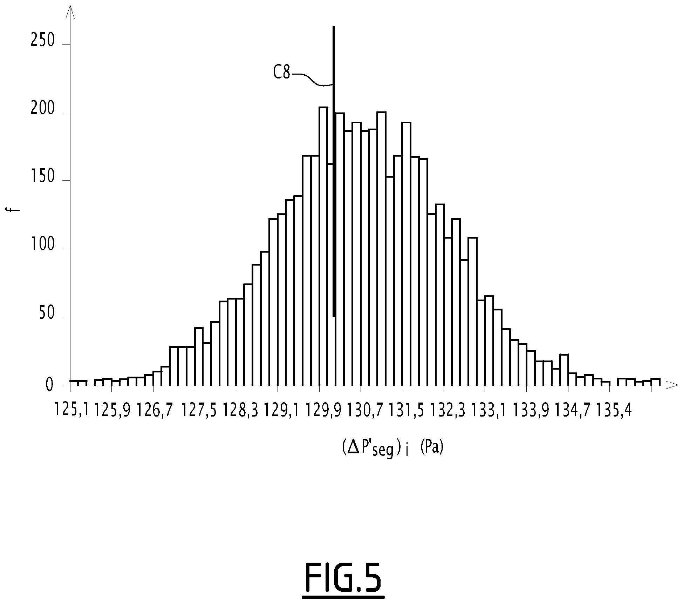

La figure 5 est un histogramme de fréquence de ces pertes de charge. La barre verticale C8 symbolise le paramètre $\Delta P_{max}$. Le module de calcul 38 estime la probabilité pour que, au bout du laps de temps donné H, les paramètres $(\Delta P'_{seg})_i$ aient atteint le paramètre $\Delta P_{max}$. Dans l'exemple, cette probabilité est d'environ 45%.

Cette probabilité est représentative du niveau de bouchage du filtre à air 20 en ce sens que, toutes choses égales par ailleurs, elle est d'autant plus élevée que le filtre à air est déjà bouché au 26 juillet.

Optionnellement, en fonction du niveau de bouchage, un remplacement du filtre à air 20 est effectué.

Ainsi, grâce aux caractéristiques décrites ci-dessus, le calculateur et la méthode ci-dessus permettent une estimation précise du niveau de bouchage du filtre à air, par exemple dans le but d'éviter un remplacement trop précoce du filtre à air 20. En effet, alors que la date normale programmée pour ce remplacement était vers le 25 mai, la méthode permet d'envisager un remplacement peu avant le 25 août.

La méthode fournit une prédiction probabiliste de la durée de vie utile restante du filtre. L'état bouché du filtre est anticipé et la durée de vie résiduelle probable est avantageusement communiquée au mainteneur. Les inspections périodiques deviennent moins utiles voire inutiles. Les pièces de rechange requises peuvent être commandées à l'avance et la disponibilité des ressources (personnel, installations, etc.) peut être planifiée à l'avance. La détection des filtres et le système d'estimation de la durée de vie restante peuvent donc améliorer la disponibilité de la flotte et réduire les coûts de maintenance (le nombre de pièces de rechange utilisées est considérablement réduit).

## Revendications

1. Méthode pour évaluer un niveau de bouchage d'un filtre à air (20) d'une unité HVAC (5), la méthode comprenant les étapes suivantes :

    - acquisition d'une première pluralité de paramètres $\Delta P_{raw}$ représentatifs d'une perte de charge entre deux côtés (28A, 28B) du filtre à air (20) à une pluralité d'instants,
    - calcul d'une seconde pluralité de paramètres $\Delta P_{seg}$ à partir de la première pluralité de paramètres $\Delta P_{raw}$, chacun des paramètres $\Delta P_{seg}$ étant respectivement représentatif d'une moyenne d'au moins certains des paramètres $\Delta P_{raw}$ sur un segment de temps passé,
    - obtention d'une variété de scénarios Si représentatifs de conditions de fonctionnement futures de l'unité HVAC (5) sur une pluralité de segments de temps futurs,
    - obtention d'un paramètre $\Delta P_{max}$ représentatif d'une perte de charge maximale autorisée entre les deux côtés (28A, 28B) du filtre à air (20),
    - à l'aide d'un modèle, pour chacun des scénarios Si, calcul d'une troisième pluralité de paramètres $(\Delta P'_{seg})_i$ représentatifs d'une évolution future de la perte de charge entre les deux côtés (28A, 28B) du filtre à air (20) sur au moins certains des segments de temps futurs,

    **caractérisée en ce que** chacun des scénarios a respectivement une probabilité pi, la méthode comprenant en outre les étapes suivantes :

    - à l'aide de la troisième pluralité de paramètres $(\Delta P'_{seg})_i$ et des probabilités pi, calcul du niveau de bouchage du filtre à air (20) sous forme :

        - soit d'une durée de vie utile résiduelle probable du filtre à air (20), représentative d'un laps de temps probable au bout duquel les paramètres $(\Delta P'_{seg})_i$ auront atteint le paramètre $\Delta P_{max}$,
        - soit d'une probabilité pour que, au bout d'un laps de temps donné H, les paramètres $(\Delta P'_{seg})_i$ aient atteint le paramètre $\Delta P_{max}$,

    - pour l'un des segments de temps passés, de préférence le dernier temporellement, calcul d'un paramètre K en utilisant le paramètre $\Delta P_{seg}$ correspondant audit segment de temps passé, le paramètre K étant représentatif d'une résistance hydraulique du filtre à air (20), la résistance hydraulique étant définie comme le ratio dudit paramètre $\Delta P_{seg}$ divisé par le carré d'un débit d'air $Q_{air}$ dans le filtre à air (20), le débit d'air $Q_{air}$ étant un débit d'air capable de créer dans le filtre à air (20) une perte de charge égale audit paramètre $\Delta P_{seg}$, et
    - à partir du paramètre K, calcul d'un paramètre D représentatif d'une différence de résistance hydraulique entre le filtre à air (20) et un filtre à air (20) neuf,

    l'étape de calcul de la durée de vie utile résiduelle probable du filtre à air (20) ou de la probabilité pour que, au bout d'un laps de temps donné H, les paramètres $(\Delta P'_{seg})_i$ aient atteint le paramètre $\Delta P_{max}$ est réalisée uniquement si le paramètre D représentatif d'une différence de résistance hydraulique entre le filtre à air (20) et un filtre à air (20) neuf a dépassé un seuil prédéterminé $D_0$.

2. Méthode selon la revendication 1, comportant en outre une acquisition d'une tension électrique U d'alimentation de l'unité HVAC (5) à ladite pluralité d'instants, et
   dans laquelle, à l'étape de calcul de la seconde pluralité de paramètres $\Delta P_{seg}$, certains des paramètres $\Delta P_{raw}$ sont sélectionnés respectivement pour obtenir chacun des paramètres $\Delta P_{seg}$, les paramètres $\Delta P_{raw}$ sélectionnés étant tels que la tension électrique U mesurée au même instant était supérieure à un seuil de tension $U_{max}$.

3. Méthode selon l'une quelconque des revendications 1 ou 2, comportant en outre une acquisition d'un angle d'ouverture $\theta$ à ladite pluralité d'instants, l'unité HVAC (5) comprenant une enceinte (24), et une prise d'air (22) ayant un clapet (32) définissant l'angle d'ouverture $\theta$ par rapport à l'enceinte (24), et
   dans laquelle, à l'étape de calcul de la seconde pluralité de paramètres $\Delta P_{seg}$, certains des paramètres $\Delta P_{raw}$ sont sélectionnés respectivement pour obtenir chacun des paramètres $\Delta P_{seg}$, les paramètres $\Delta P_{raw}$ sélectionnés étant tels que l'angle d'ouverture $\theta$ est sensiblement égal à une même valeur prédéterminée, de préférence nulle.

4. Méthode selon l'une quelconque des revendications 1 à 3, dans laquelle chacun des segments de temps passés et chacun des segments de temps futurs possède une durée égale à 1 jour.

5. Méthode selon l'une quelconque des revendications 1 à 4, dans laquelle l'étape de calcul d'une troisième pluralité de paramètres $(\Delta P'_{seg})_i$ comporte un calage du modèle sur les segments de temps passé, le ca-

lage utilisant les paramètres $\Delta P_{seg}$.

6. Méthode selon l'une quelconque des revendications 1 à 5, dans laquelle la durée de vie résiduelle probable est calculée comme une moyenne de durées de vie résiduelles, chaque durée de vie résiduelle étant respectivement représentative d'un laps de temps au bout duquel les paramètres $(\Delta P'_{seg})_i$ auront atteint le paramètre $\Delta P_{max}$ dans l'un des scénarios Si, ladite moyenne étant pondérée par les probabilités pi.

7. Méthode selon l'une quelconque des revendications 1 à 6, dans laquelle l'obtention du paramètre $\Delta P_{max}$ comprend les sous-étapes suivantes :

   - obtention d'un paramètre $Q_{air,min}$ à partir d'un débit nominal d'air de l'unité HVAC (5), le paramètre $Q_{air,min}$ étant représentatif d'un débit minimal d'air conditionné souhaité pour l'unité HVAC (5), et
   - calcul du paramètre $\Delta P_{max}$ en utilisant le paramètre $Q_{air,min}$.

8. Calculateur (10) configuré pour évaluer un niveau de bouchage d'un filtre à air (20) d'une unité HVAC (5), le calculateur (10) comportant :

   - un module d'acquisition (34) adapté pour acquérir une première pluralité de paramètres $\Delta P_{raw}$ représentatifs d'une perte de charge entre deux côtés (28A, 28B) du filtre à air (20) à une pluralité d'instants,
   - une mémoire (36) dans laquelle sont enregistrés :

      - une variété de scénarios $S_i$ représentatifs de conditions de fonctionnement futures de l'unité HVAC (5) sur une pluralité de segments de temps futurs, et
      - un paramètre $\Delta P_{max}$ représentatif d'une perte de charge maximale autorisée entre les deux côtés (28A, 28B) du filtre à air (20),

   - un module de calcul adapté pour calculer :

      - une seconde pluralité de paramètres $\Delta P_{seg}$ à partir de la première pluralité de paramètres $\Delta P_{raw}$, chacun des paramètres $\Delta P_{seg}$ étant respectivement représentatif d'une moyenne d'au moins certains des paramètres $\Delta P_{raw}$ sur un segment de temps passé,
      - pour chacun des scénarios $S_i$, une troisième pluralité de paramètres $(\Delta P'_{seg})_i$ représentatifs d'une évolution future de la perte de charge entre les deux côtés (28A, 28B) du filtre à air (20) sur au moins certains des segments de temps futurs,

**caractérisé en ce qu'**une probabilité pi de chacun des scénarios Si est enregistrée dans la mémoire (36), le module de calcul étant en outre adapté pour calculer :

   - à l'aide de la troisième pluralité de paramètres $(\Delta P'_{seg})_i$ et des probabilités $p_i$, le niveau de bouchage du filtre à air (20) sous forme :

      - soit d'une durée de vie utile résiduelle probable du filtre à air (20), représentative d'un laps de temps probable au bout duquel les paramètres $(\Delta P'_{seg})_i$ auront atteint le paramètre $\Delta P_{max}$,
      - soit d'une probabilité pour que, au bout d'un laps de temps donné H, les paramètres $(\Delta P'_{seg})_i$ aient atteint le paramètre $\Delta P_{max}$

   - pour l'un des segments de temps passés, de préférence le dernier temporellement, un paramètre K en utilisant le paramètre $\Delta P_{seg}$ correspondant audit segment de temps passé, le paramètre K étant représentatif d'une résistance hydraulique du filtre à air (20), la résistance hydraulique étant définie comme le ratio dudit paramètre $\Delta P_{seg}$ divisé par le carré d'un débit d'air $Q_{air}$ dans le filtre à air (20), le débit d'air $Q_{air}$ étant un débit d'air capable de créer dans le filtre à air (20) une perte de charge égale audit paramètre $\Delta P_{seg}$, et
   - à partir du paramètre K, un paramètre D représentatif d'une différence de résistance hydraulique entre le filtre à air (20) et un filtre à air (20) neuf,

le calculateur étant configuré pour que calcul de la durée de vie utile résiduelle probable du filtre à air (20) ou de la probabilité pour que, au bout d'un laps de temps donné H, les paramètres $(\Delta P'_{seg})_i$ aient atteint le paramètre $\Delta P_{max}$, soit réalisé uniquement si le paramètre D représentatif d'une différence de résistance hydraulique entre le filtre à air (20) et un filtre à air (20) neuf a dépassé un seuil prédéterminé $D_0$.

**Patentansprüche**

1. Verfahren zum Bewerten eines Verstopfungsgrads eines Luftfilters (20) einer HLK-Einheit (5), das Verfahren umfassend die folgenden Schritte:

   - Erfassen einer ersten Vielzahl von $\Delta P_{raw}$-Parametern, die repräsentativ für einen Druckverlust zwischen zwei Seiten (28A, 28B) des Luftfilters (20) zu einer Vielzahl von Zeitpunkten sind,

- Berechnen einer zweiten Vielzahl von Parametern $\Delta P_{seg}$ aus der ersten Vielzahl von Parametern $\Delta P_{raw}$, wobei jeder der Parameter $\Delta P_{seg}$ jeweils repräsentativ für einen Durchschnitt von mindestens einigen der Parameter $\Delta P_{raw}$ über ein Segment vergangener Zeit ist,
- Erlangen einer Vielzahl von $S_i$-Szenarien, die repräsentativ für zukünftige Betriebsbedingungen der HLK-Einheit (5) über eine Vielzahl von zukünftigen Zeitsegmenten sind,
- Erlangen eines Parameters $\Delta P_{max}$, der repräsentativ für einen maximal zulässigen Druckverlust zwischen den zwei Seiten (28A, 28B) des Luftfilters (20) ist,
- mittels eines Modells für jedes der Si-Szenarien Berechnen einer dritten Vielzahl von Parametern $(\Delta P'_{seg})_i$, die repräsentativ für eine zukünftige Entwicklung des Druckverlustes zwischen den zwei Seiten (28A, 28B) des Luftfilters (20) über zumindest einige der zukünftigen Zeitsegmente sind,

**dadurch gekennzeichnet, dass** jedes der Szenarien jeweils eine Wahrscheinlichkeit pi aufweist, das Verfahren ferner umfassend die folgenden Schritte:

- mittels der dritten Vielzahl von Parametern $(\Delta P'_{seg})_i$ und Wahrscheinlichkeiten $p_i$ Berechnen des Verstopfungsgrads des Luftfilters (20) in folgender Form:

    - entweder einer wahrscheinlichen Restnutzungsdauer des Luftfilters (20), die repräsentativ für eine wahrscheinliche Zeitspanne ist, nach der die Parameter $(\Delta P'_{seg})_i$ den Parameter $\Delta P_{max}$ erreicht haben,
    - oder einer Wahrscheinlichkeit dafür, dass nach einer gegebenen Zeitspanne H die Parameter $(\Delta P'_{seg})_i$ den Parameter $\Delta P_{max}$ erreicht haben,

- für eines der vergangenen Zeitsegmente, vorzugsweise das zeitlich letzte, Berechnen eines Parameters K unter Verwendung des Parameters $\Delta P_{seg}$, der dem vergangenen Zeitsegment entspricht, wobei der Parameter K repräsentativ für einen hydraulischen Widerstand des Luftfilters (20) ist, wobei der hydraulische Widerstand als das Verhältnis des Parameters $\Delta P_{seg}$ geteilt durch das Quadrat eines Luftstroms $Q_{air}$ in dem Luftfilter (20) definiert ist, wobei der Luftstrom $Q_{air}$ ein Luftstrom ist, der in dem Luftfilter (20) einen Druckverlust erzeugen kann, der gleich wie der Parameter $\Delta P_{seg}$ ist, und
- anhand des Parameters K, Berechnen eines Parameters D, der repräsentativ für einen Unterschied in dem hydraulischen Widerstand zwischen dem Luftfilter (20) und einem neuen Luftfilter (20) ist,

wobei der Schritt eines Berechnens der wahrscheinlichen Restnutzungsdauer des Luftfilters (20) oder der Wahrscheinlichkeit, dass nach einer gegebenen Zeitspanne H die Parameter $(\Delta P'_{seg})_i$ den Parameter $\Delta P_{max}$ erreicht haben, nur dann ausgeführt wird, wenn der Parameter D, der repräsentativ für einen Unterschied in dem hydraulischen Widerstand zwischen dem Luftfilter (20) und einem neuen Luftfilter (20) ist, einen vorbestimmten Schwellenwert $D_0$ überschritten hat.

2. Verfahren nach Anspruch 1, ferner umfassend eine Erfassung einer elektrischen Spannung U zur Versorgung der HLK-Einheit (5) zu der genannten Vielzahl von Zeitpunkten, und
wobei bei dem Schritt eines Berechnens der zweiten Vielzahl von Parametern $\Delta P_{seg}$ einige der Parameter $\Delta P_{raw}$ jeweils ausgewählt werden, um jeden der Parameter $\Delta P_{seg}$ zu erlangen, wobei die ausgewählten Parameter $\Delta P_{raw}$ derart sind, dass die zur gleichen Zeit gemessene elektrische Spannung U größer war als ein Spannungsschwellenwert $U_{max}$.

3. Verfahren nach einem der Ansprüche 1 oder 2, ferner umfassend eine Erfassung eines Öffnungswinkels θ zu der Vielzahl von Zeitpunkten, die HLK-Einheit (5) umfassend ein Gehäuse (24) und einen Lufteinlass (22), der eine Klappe (32) aufweist, die den Öffnungswinkel θ in Bezug auf das Gehäuse (24) definiert, und
wobei bei dem Schritt eines Berechnens der zweiten Vielzahl von Parametern $\Delta P_{seg}$ einige der Parameter $\Delta P_{raw}$ jeweils ausgewählt werden, um jeden der Parameter $\Delta P_{seg}$ zu erlangen, wobei die ausgewählten Parameter $\Delta P_{raw}$ derart sind, dass der Öffnungswinkel 0 im Wesentlichen gleich wie gleicher vorbestimmter Wert, vorzugsweise Null, ist.

4. Verfahren nach einem der Ansprüche 1 bis 3, wobei jedes der vergangenen Zeitsegmente und jedes der zukünftigen Zeitsegmente eine Dauer von 1 Tag besitzt.

5. Verfahren nach einem der Ansprüche 1 bis 4, wobei der Schritt eines Berechnens einer dritten Vielzahl von Parametern $(\Delta P'_{seg})_i$ eine Modellkalibrierung auf die Segmente der vergangenen Zeitsegmente umfasst, wobei die Kalibrierung die $AP_{seg}$-Parameter verwendet.

6. Verfahren nach einem der Ansprüche 1 bis 5, wobei die wahrscheinliche Restlebensdauer als Mittelwert von Restlebensdauern berechnet wird, wobei jede Restlebensdauer jeweils repräsentativ für eine Zeitspanne ist, nach der die Parameter $(\Delta P'_{seg})_i$ in einem

der Szenarien Si den Parameter $\Delta P_{max}$ erreicht haben, wobei der Mittelwert durch die Wahrscheinlichkeiten pi gewichtet wird.

7. Verfahren nach einem der Ansprüche 1 bis 6, wobei das Erlangen des Parameters $\Delta P_{max}$ die folgenden Teilschritte umfasst:

- Erlangen eines Parameters $Q_{air,min}$ anhand eines Nennluftdurchsatzes der HLK-Einheit (5), wobei der Parameter $Q_{air,min}$ repräsentativ für einen gewünschten Mindestdurchsatz von klimatisierter Luft für die HLK-Einheit (5) ist, und
- Berechnen des Parameters $\Delta P_{max}$ unter Verwendung des Parameters $Q_{air,min}$.

8. Rechner (10), der konfiguriert ist, um einen Verstopfungsgrad eines Luftfilters (20) einer HLK-Einheit (5) auszuwerten, der Rechner (10) umfassend:

- ein Erfassungsmodul (34), das angepasst ist, um eine erste Vielzahl von Parametern $\Delta P_{raw}$ zu erfassen, die repräsentativ für einen Druckverlust zwischen zwei Seiten (28A, 28B) des Luftfilters (20) zu einer Vielzahl von Zeitpunkten sind,
- einen Speicher (36), in dem Folgendes gespeichert ist:

- eine Vielzahl von Si-Szenarien, die repräsentativ für zukünftige Betriebsbedingungen der HLK-Einheit (5) über eine Vielzahl von zukünftigen Zeitsegmenten sind, und
- einen Parameter $\Delta P_{max}$, der repräsentativ für einen maximal zulässigen Druckverlust zwischen den zwei Seiten (28A, 28B) des Luftfilters (20) ist,
- ein geeignetes Rechenmodul, das zum Berechnen von Folgendem angepasst ist:

- eine zweite Vielzahl von Parametern $\Delta P_{seg}$ anhand der ersten Vielzahl von Parametern $\Delta P_{raw}$, wobei jeder der Parameter $\Delta P_{seg}$ jeweils repräsentativ für einen Durchschnitt von mindestens einigen der Parameter $\Delta P_{raw}$ über ein Segment vergangener Zeit ist,
- für jedes der Si-Szenarien, eine dritte Vielzahl von Parametern $(\Delta P'_{seg})_i$, die repräsentativ für eine zukünftige Entwicklung des Druckverlusts zwischen den zwei Seiten (28A, 28B) des Luftfilters (20) über zumindest einige der zukünftigen Zeitsegmente sind,

**dadurch gekennzeichnet, dass** eine Wahrscheinlichkeit pi von jedem der Si-Szenarien in dem Speicher (36) gespeichert ist, wobei das Rechenmodul ferner zum Berechnen von Folgendem angepasst ist:

mittels der dritten Vielzahl von Parametern $(\Delta P'_{seg})_i$ und Wahrscheinlichkeiten pi, Berechnen des Verstopfungsgrads des Luftfilters (20) in folgender Form:

- einer wahrscheinlichen Restnutzungsdauer des Luftfilters (20), die repräsentativ für eine wahrscheinliche Zeitspanne ist, nach der die Parameter $(\Delta P'_{seg})_i$ den Parameter $\Delta P_{max}$ erreicht haben,
- oder einer Wahrscheinlichkeit dafür, dass nach einer gegebenen Zeitspanne H die Parameter $(\Delta P'_{seg})_i$ den Parameter $\Delta P_{max}$ erreicht haben,

- für eines der vergangenen Zeitsegmente, vorzugsweise das zeitlich letzte, eines Parameters K unter Verwendung des Parameters $\Delta P_{seg}$, der dem vergangenen Zeitsegment entspricht, wobei der Parameter K repräsentativ für einen hydraulischen Widerstand des Luftfilters (20) ist, wobei der hydraulische Widerstand als das Verhältnis des Parameters $\Delta P_{seg}$ geteilt durch das Quadrat eines Luftstroms $Q_{air}$ in dem Luftfilter (20) definiert ist, wobei der Luftstrom $Q_{air}$ ein Luftstrom ist, der in dem Luftfilter (20) einen Druckverlust erzeugen kann, der gleich wie der Parameter $\Delta P_{seg}$ ist, und
- anhand des Parameters K, eines Parameters D, der repräsentativ für einen Unterschied in dem hydraulischen Widerstand zwischen dem Luftfilter (20) und einem neuen Luftfilter (20) ist,

wobei der Rechner konfiguriert ist, dass die Berechnung der wahrscheinlichen Restnutzungsdauer des Luftfilters (20) oder der Wahrscheinlichkeit, dass nach einer gegebenen Zeitspanne H die Parameter $(\Delta P'_{seg})_i$ den Parameter $\Delta P_{max}$ erreicht haben, nur dann ausgeführt wird, wenn der Parameter D, der repräsentativ für einen Unterschied in dem hydraulischen Widerstand zwischen dem Luftfilter (20) und einem neuen Luftfilter (20) ist, einen vorbestimmten Schwellenwert $D_0$ überschritten hat.

## Claims

1. A method for evaluating a clogging level of an air filter (20) of an HVAC unit (5), the method comprising the following steps:

- acquiring a first plurality of parameters $\Delta P_{raw}$ representative of a pressure loss between two sides (28A, 28B) of the air filter (20) at a plurality of moments,

- calculating a second plurality of parameters $\Delta P_{seg}$ from the first plurality of parameters $\Delta P_{raw}$, each of the parameters $\Delta P_{seg}$ respectively being representative of an average of at least some of the parameters $\Delta P_{raw}$ over a past time segment,
- obtaining a variety of scenarios Si representative of future operating conditions of the HVAC unit (5) on a plurality of future time segments,
- obtaining a parameter $\Delta P_{max}$ representative of a maximum authorized pressure loss between the two sides (28A, 28B) of the air filter (20),
- using a model, for each of the scenarios Si, calculating a third plurality of parameters $(\Delta P'_{seg})_i$ representative of a future evolution of the pressure loss between the two sides (28A, 28B) of the air filter (20) on at least some of the future time segments,

**characterised in that** each of the scenarios respectively has a probability pi, the method further comprising the following steps:

- using the third plurality of parameters $(\Delta P'_{seg})_i$, calculating the clogging level of the air filter (20) in the form:

- either of a likely residual useful lifetime of the air filter (20), representative of a likely length of time at the end of which the parameters $(\Delta P'_{seg})_i$ will have reached the parameter $\Delta P_{max}$,
- or of a likelihood so that, at the end of a given length of time H, the parameters $(\Delta P'_{seg})_i$ have reached the parameter $\Delta P_{max}$,

- for one of the past time segments, preferably the last in time, calculating a parameter K by using the parameter $\Delta P_{seg}$ corresponding to said past time segment, the parameter K being representative of a hydraulic resistance of the air filter (20), the hydraulic resistance being defined as the ratio of said parameter $\Delta P_{seg}$ divided by the square of an air flow rate $Q_{air}$ in the air filter (20), the air flow rate $Q_{air}$ being an air flow rate capable of creating, in the air filter (20), a pressure loss equal to said parameter $\Delta P_{seg}$; and
- from the parameter K, calculating a parameter D representative of a difference in hydraulic resistance between the air filter (20) and a new air filter (20),

the step for calculating the likely residual useful lifetime of the air filter (20) or the likelihood so that, at the end of a given length of time H, the parameters $(\Delta P'_{seg})_i$ have reached the parameter $\Delta P_{max}$, is carried out only if the parameter D representative of a difference in hydraulic resistance between the air filter (20) and a new air filter (20) has exceeded a predetermined threshold $D_0$.

2. The method according to claim 1, further including an acquisition of a supply voltage U of the HVAC unit (5) at said plurality of moments, and wherein, in the step for calculating the second plurality of parameters $\Delta P_{seg}$, some of the parameters $\Delta P_{raw}$ are respectively selected in order to obtain each of the parameters $\Delta P_{seg}$, the selected parameters $\Delta P_{raw}$ being such that the voltage U measured at the same moment was greater than a voltage threshold $U_{max}$.

3. The method according to claim 1 or 2, further including an acquisition of an opening angle $\theta$ at said plurality of moments, the HVAC unit (5) comprising a chamber (24), and an air inlet (22) having a gate (32) defining the opening angle $\theta$ relative to the chamber (24), and wherein, in the step for calculating the second plurality of parameters $\Delta P_{seg}$, some of the parameters $\Delta P_{raw}$ are selected respectively in order to obtain each of the parameters $\Delta P_{seg}$, the selected parameters $\Delta P_{raw}$ being such that the opening angle $\theta$ is substantially equal to a same predetermined value, preferably nil.

4. The method according to any one of claims 1 to 3, wherein each of the past time segments and each of the future time segments has a duration equal to 1 day.

5. The method according to any one of claims 1 to 4, wherein the step for calculating a third plurality of parameters $(\Delta P'_{seg})_i$ includes a calibration of the model on the past time segments, the calibration using the parameters $\Delta P_{seg}$.

6. The method according to any one of claims 1 to 5, wherein the likely residual useful lifetime is calculated as an average of residual lifetimes, each residual lifetime respectively being representative of a length of time at the end of which the parameters $(\Delta P'_{seg})_i$ will have reached the parameter $\Delta P_{max}$ in one of the scenarios $S_i$, said average being weighted by the probabilities pi.

7. The method according to any one of claims 1 to 6, wherein obtaining the parameter $\Delta P_{max}$ comprises the following sub-steps:

- obtaining a parameter $Q_{air,min}$ from a nominal air flow rate of the HVAC unit (5), the parameter $Q_{air,min}$ being representative of a minimum conditioned air flow rate desired for the HVAC unit (5), and

- calculating the parameter $\Delta P_{max}$ by using the parameter $Q_{air,min}$.

8. A computer (10) configured to evaluate the clogging level of an air filter (20) in an HVAC unit (5), the computer (10) including:

- an acquisition module (34) suitable for acquiring a first plurality of parameters $\Delta P_{raw}$ representative of a pressure loss between two sides (28A, 28B) of the air filter (20) at a plurality of moments,
- a memory (36) in which the following are recorded:

- a variety of scenarios Si representative of future operating conditions of the HVAC unit (5) on a plurality of future time segments, and
- a parameter $\Delta P_{max}$ representative of a maximum authorized pressure loss between the two sides (28A, 28B) of the air filter (20),

- a calculating module suitable for calculating:

- a second plurality of parameters $\Delta P_{seg}$ from the first plurality of parameters $\Delta P_{raw}$, each of the parameters $\Delta P_{seg}$ respectively being representative of an average of at least some of the parameters $\Delta P_{raw}$ over a past time segment,
- for each of the scenarios Si, a third plurality of parameters $(\Delta P'_{seg})_i$ representative of a future evolution of the pressure loss between the two sides (28A, 28B) of the air filter (20) on at least some of the future time segments,

**characterised in that** a probability $p_i$ of each of the scenarios Si is stored in the memory (36), the calculating module being further adapted for calculating:

- using the third plurality of parameters $(\Delta P'_{seg})_i$ and the probabilities $p_i$, the clogging level of the air filter (20) in the form:

- either of a likely residual useful lifetime of the air filter (20), representative of a likely length of time at the end of which the parameters $(\Delta P'_{seg})_i$ will have reached the parameter $\Delta P_{max}$,
- or of a likelihood so that, at the end of a given length of time H, the parameters $(\Delta P'_{seg})_i$ have reached the parameter $\Delta P_{max}$,

- for one of the past time segments, preferably the last in time, a parameter K by using the parameter $\Delta P_{seg}$ corresponding to said past time segment, the parameter K being representative of a hydraulic resistance of the air filter (20), the hydraulic resistance being defined as the ratio of said parameter $\Delta P_{seg}$ divided by the square of an air flow rate $Q_{air}$ in the air filter (20), the air flow rate $Q_{air}$ being an air flow rate capable of creating, in the air filter (20), a pressure loss equal to said parameter $\Delta P_{seg}$; and
- from the parameter K, a parameter D representative of a difference in hydraulic resistance between the air filter (20) and a new air filter (20),

the calculating module being configured so that calculating the likely residual useful lifetime of the air filter (20) or the likelihood so that, at the end of a given length of time H, the parameters $(\Delta P'_{seg})_i$ have reached the parameter $\Delta P_{max}$, is carried out only if the parameter D representative of a difference in hydraulic resistance between the air filter (20) and a new air filter (20) has exceeded a predetermined threshold $D_0$.

FIG.1

FIG.2

EP 3 680 734 B1

## FIG.3

FIG.4

**FIG.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015059492 A